# EUROPEAN PATENT APPLICATION

(11) **EP 2 762 393 A2**
(43) Date of publication of application: **06.08.2014**
(21) Application number: 13189213.5
(22) Date of filing: 18.10.2013
(51) Int. Cl.: B62J 9/02, B62J 11/00

(54) **Tool-holder for bicycles**

(30) Priority: 19.10.2012 IT MO20120255
(71) Applicant: Candito, Alessandro, 41043 Formigine (MO) (IT)
(72) Inventor: Candito, Alessandro, 41043 Formigine (MO) (IT)
(74) Representative: Grana, Daniele

(57) **Abstract**

A tool-holder (1) to transport tools for replacing an inner tube of a bicycle, which comprises a box-shaped container element (2) in turn comprising a first housing (3) to contain a consumable cylinder cartridge (4) and a second housing (5) to contain a tap, and fixing means (7, 8, 9) to fix the container element (2) to the rails associated with the shell of the saddle of the bicycle so that the container element is arrangeable underneath the shell of the saddle of the bicycle above the rails associated with it.

## Description

The present invention relates to a tool-holder for bicycles.

Bags are known for containing the tools for replacing a damaged inner tube, which can be fastened to the bicycle underneath the saddle.

These tools are usually composed of one or more tyre-removal levers for the removal of the tyre from the rim, so as to be able to remove the damaged inner tube, of a cylinder cartridge containing carbon dioxide under pressure and of a tap for the controlled dispensing of the gas contained in the cylinder cartridge, in order to inflate the replacement inner tube, once this has been positioned in the rim channel and the tyre has been fitted.

The tyres which are currently used on bicycles, especially racing bicycles, have a softer bead compared to those used in the past, and this permits, if necessary, changing an inner tube, taking the relative tyre off the rim channel using hands only, i.e., without the need for the above-mentioned tyre-removal levers. Consequently, currently, the tool-holder and inner-tube holder bags are often without these levers which, over time, are becoming more and more useless. The bag of known type is hung on the rails of the saddle and/or the saddle pillar, e.g., by means of strips having Velcro fasteners, so it protrudes at the back of the saddle itself.

Some cyclists have found that the known bag is uncomfortable because it is hung on the bicycle in a position wherein, if it is not correctly fastened, it can knock against the cyclist's legs during pedalling.

Furthermore, during cycling, the bag is subject to swinging, which the cyclist finds annoying.

Furthermore, nowadays, amateur cyclists, which make up a consistent part of buyers of bicycle tools, are particularly concerned about the aesthetic aspects of their vehicle, and the opinion is by now firmly rooted that such tool-holder and inner-tube holder bags which protrude from under the saddle are unsightly.

The main aim of the present invention is to provide a tool-holder for bicycles, suitable for transporting on board the bicycle the tools for changing the inner tubes, that is not troublesome or uncomfortable for the cyclist.

A further object of the invention is to provide a tool-holder for bicycles which, once fitted on the bicycle, is more pleasant to look at for amateur cyclists, compared to the solutions currently available on the market.

Another object of the present invention is to provide a tool-holder for bicycles which allows overcoming the mentioned drawbacks of the state of the art within the ambit of a simple, rational, easy, effective to use and low cost solution.

The above objects are achieved by the present tool-holder suitable for transporting tools for replacing an inner tube of a bicycle, according to claim 1 and claim 2.

Other characteristics and advantages of the present invention will become more evident from the description of particular, but not sole, embodiments of a tool-holder for bicycles, illustrated purely as an example but not limited to the annexed drawings in which:
figure 1 is an axonometric view from below of the first embodiment of the tool-holder according to the invention;
figure 2 is a further axonometric view of the tool-holder of figure 1; and
figure 3 is an axonometric exploded view of a second embodiment of the tool-holder according to the invention.

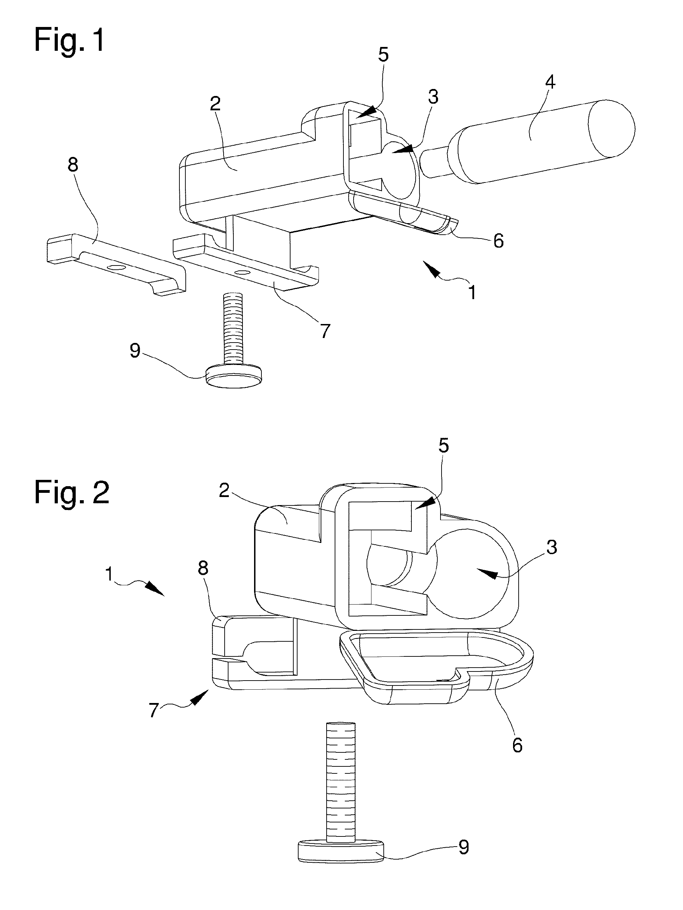

With particular reference to such figures, globally indicated by 1 is the tool-holder of the invention, shown in its first embodiment in figures 1 and 2 and in its second embodiment in figure 3.

The proposed tool-holder 1 comprises, in its more general aspects : at least a container element 2 in turn comprising at least a first housing 3 to contain a consumable cylinder cartridge 4, containing gas, of the type suitable for inflating inner tubes, and at least a second housing 5 to contain a tap for dispensing said gas of the cylinder cartridge 4 in a controlled way. Advantageously, the container element 2, and therefore the first and the second housing 3, 5, are available underneath the saddle of a bicycle, above the relative rails.

In particular, in the preferred embodiment of the tool-holder 1, its container element 2 is box-shaped, includes inside the first and the second housing 3, 5, and above all is arranged between the shell and the rails of the saddle, being joined to the latter by means of fixing means 7, 8, better described below. Before explaining in detail further construction aspects of the tool-holder 1, it must be made clear that because it is arranged underneath the saddle between the shell and the rails, it is not only unable in any way to trouble the cyclist during cycling, but furthermore, considering it is covered by the saddle itself, it is not perceived by the amateur cyclist as an unsightly protrusion on the bicycle and it is therefore totally without the drawbacks of prior art.

Consequently, the proposed tool-holder 1 can be used together with a container for a spare inner tube, to define with this an inner tube replacement kit.

In fact, the tool-holder 1 makes available to the cyclist both the cylinder cartridge 4 (which normally includes carbon dioxide under pressure) and the tap for the controlled inflation of the spare inner tube.

In other words, the invention provides the use of the tool-holder 1 to transport on board a bicycle the tools for replacing an inner tube, which comprise one or more consumable cylinder cartridges 4 and/or one or more taps.

In the first embodiment of the tool-holder 1, the first housing 3 is separated from the second housing 5 and has a cylindrical shape suitable for fully receiving the cylinder cartridge 4 (as clearly shown in figure 1).

The second housing 5 can instead be defined by two communicating internal chambers, the longitudinal extension of one being perpendicular to that of the other, to define a housing suitable for completely containing the tap which, as is known, has a T shape, i.e., has a dispensing arm perpendicular both to the arm for coupling to the cylinder cartridge and to the arm which bears the operating knob.

The boxed element 2 of the tool-holder 1 can have a lid 6 to close the housings 3, 5; in the event of such element 2 being made of plastic material, the lid 6 can be obtained in a single body piece with the rest of the element 2 and have an opening hinge defined by a thinned section in correspondence to the joining line between the lid 6 and the remaining part of the boxed element 2.

The aforementioned fixing means 7, 8 can be of the type attachable to the rails of the saddle, and can include a vice having a lower jaw 7 directly connected, or also made in an integral body piece, to the boxed element 2, and a free upper jaw 8.

The lower and the upper jaws 7, 8 are suitable for being arranged below and above the pair of rails respectively and for being joined firmly together and to the rails themselves by means of a threaded screw 9, as can be seen from the figures 1 and 2.

In detail, by tightening such screw 9, the tool-holder becomes integral with the rails so as to make it firmly fastened to the saddle itself, to the full benefit of the firmness of the fastening to the bicycle.

The second embodiment of the invention can have the characteristics of the first embodiment, apart from the particular features indicated below.

In the second embodiment, the tool-holder 1 comprises a main body 10 and a removable drawer 11 coupled integral to the body 10, to define said boxed element 2.

The internal housings 3, 5 of the boxed element 2 are identified by a concave tank-shaped floor 12, shaped by the drawer 11 and by a tile-shaped ceiling 13, shaped by the body 10.

Preferably, as shown in the figure 3, the two housings are not separate, but identified in the same internal volume defined following the coupling of the drawer 11 to the body 10.

Even more in detail, the body can include a rear base 18 which closes said volume at the rear, while the drawer 12 can include a front wall 19 which closes the volume itself on the front.

Optionally, the drawer 11 and the body 10 can comprise respective interlocking releasable means to maintain the reciprocal coupling, of the type e.g. comprising a catch arranged on the drawer 11 (not shown) which engages in a seat 14 obtained on the body 10.

Preferably, the body 10 can shape below two arc-shaped supporting tabs 20, to help support the drawer 11, placed at a certain distance from said base 18, on which tabs the aforementioned floor 12 rests.

Furthermore, indicator means can be provided in the form of a lighting device 15, having e.g. a light emission diode (LED) 16 or another lighting means, accommodated in a collecting box 17 fixable under the floor 12 of the drawer 11.

In practice, the user fixes the body 10 between the rails and the shell (or casing) of the saddle, inserts the cylinder cartridge 4 and the tap (or two cylinder cartridges, etc..) in the drawer and then couples the latter to the body 10.

When tools are needed, the user need only take the drawer 11 out of the body 10 and take what he/she needs, before re-inserting the drawer 11 back in the body 10 itself.

In a further embodiment of the tool-holder, not shown, the first and the second housings 3, 5 are integrated in the shell of the saddle, e.g., obtained in it in an integral body.

It has in practice been ascertained how the described invention achieves the proposed objects, and in particular the fact is underlined that it makes available a tool-holder 1 which permits overcoming all the drawbacks explained during the description of the prior art.

## Claims

1. Tool-holder (1) to transport tools for replacing an inner tube of a bicycle, comprising at least a container element (2) in turn comprising: at least a first housing (3) to contain a consumable cylinder cartridge (4), containing gas, of the type suitable for inflating inner tubes; and at least a second housing (5) to contain a tap for dispensing said gas of the cylinder cartridge in a controlled way; said tool-holder (1) being **characterized by** the fact that said container element (2) is box-shaped and is available underneath the shell of the saddle of said bicycle, above the rails associated with it; said tool-holder (1) comprising fixing means (7, 8, 9) to fix said container element (2) to said rails of the saddle.

2. Tool-holder (1), **characterized by** the fact that said first and second housings (3, 5) are integrated in a shell of said saddle.

3. Tool-holder (1) according to one or more of the preceding claims, **characterized by** the fact that said first housing (3) is separated from said second housing (5) and has a cylindrical shape suitable for fully receiving said cylinder cartridge (4).

4. Tool-holder (1) according to claim 1, **characterized by** the fact that said fixing means (7, 8, 9) comprise a vice having a lower jaw (7) and an upper jaw (8).

5. Tool-holder (1) according to one or more of the preceding claims, **characterized by** the fact that said second housing (5) is defined by two communicating internal chambers, having respective longitudinal extensions which are perpendicular to one another, said chambers together being suitable for containing a tap.

6. Tool-holder (1) according to one or more of the preceding claims, **characterized by** the fact that said container element (2) has a lid (6) to close said housings (3, 5).

7. Tool-holder (1) according to claim 1, **characterized by** the fact that it comprises a main body (10) and a removable drawer (11) coupled integral to the body (10), to define said boxed element (2).

8. Use of a tool-holder (1) according to one or more of the preceding claims, to transport on board a bicycle the tools for replacing an inner tube, comprising one or more of said consumable cylinder cartridges (4) and/or one or more of said taps.
